## Europäisches Patentamt

(19) ## European Patent Office

## Office européen des brevets

(11) Veröffentlichungsnummer: **0 008 284**
**B1**

(12) # EUROPÄISCHE PATENTSCHRIFT

(45) Veröffentlichungstag der Patentschrift:
28.10.81

(51) Int. Cl.³: **C 04 B 41/32,** C 04 B 15/00,
B 05 D 3/02

(21) Anmeldenummer: 79890024.7

(22) Anmeldetag: 07.08.79

(54) **Verfahren zur Herstellung von mit Kunststoff beschichteten Zierbetonsteinen.**

(30) Priorität: 07.08.78 AT 5724/78

(43) Veröffentlichungstag der Anmeldung:
20.02.80 Patentblatt 80/4

(45) Bekanntmachung des Hinweises auf die Patenterteilung:
28.10.81 Patentblatt 81/43

(84) Benannte Vertragsstaaten:
BE CH DE FR GB IT LU NL SE

(56) Entgegenhaltungen:
DE-A-1 954 013
DE-A1-2 637 728
DE-B2-2 551 837
US-A-3 953 623

E. PROBST «Handbuch der Betonsteinindustrie»,
V. Auflage, 1943, C. MARHOLD VERLAGSBUCH-
HANDLUNG Halle a. S., Seiten 214–218, 290–283.
314–315, 741–747

(73) Patentinhaber: Häring Bruno, Aurieglgasse 265,
A-2632 Grafenbach, N.Ö. (AT)

(72) Erfinder: Häring Bruno, Aurieglgasse 265,
A-2632 Grafenbach, N.Ö. (AT)

(74) Vertreter: Beer, Otto, Dipl.-Ing. et al, Lindengasse 8,
A-1071 Wien (AT)

### Verfahren zur Herstellung von mit Kunststoff beschichteten Zierbetonsteinen

Die Erfindung betrifft ein Verfahren zur Herstellung von mit Kunststoff beschichteten Zierbetonsteinen.

Übliche Betonmischungen, die je Raumteil Zement 1 bis 3, in Ausnahmefällen 5 Raumteile Zuschlagstoffe enthalten, lassen sich mit Kunststoffen im Einbrennverfahren, bei welchem Temperaturen zwischen 180 und 220°C auftreten, nicht beschichten, da die Betonsteine bei diesen Temperaturen springen und teilweise gänzlich zerplatzen. Die Verwendung von feuerfesten Bindemitteln ist für Zierbetonsteine, wie sie beispielsweise für Gartenzäune u. dgl. verwendet werden, zu teuer.

In der DE-A 1 954 013 sind mit Kunststoff (Epoxyharz) beschichtete Betonelemente, die aus fetten, d.h. viel Zement enthaltenden Betonmischungen bestehen, beschrieben, ohne dass angegeben ist, wie die Kunststoffschichten aufgebracht werden sollen, so dass auch das bei fetten Betonmischungen nicht ohne nachteilige Beschädigungen durchführbare Einbrennen von Kunstharzpulver nicht erwähnt ist.

Aus Probst «Handbuch der Zementwaren- und Kunststein-Industrie», Seite 84 sind Betonmischungen mit einem Zement-Zuschlagstoff-Verhältnis bis 1:16 erwähnt, ohne dass dabei allerdings auf die Verwendbarkeit derartiger Mischungen für die Herstellung von Ziersteinen mit eingebrannter Kunstharzbeschichtung hingewiesen wird.

Der Erfindung liegt die Aufgabe zugrunde, ein Verfahren anzugeben, das die Herstellung von im Einbrennverfahren mit Kunststoff beschichteten Zierbetonsteinen ermöglicht.

Erfindungsgemäss wird diese Aufgabe durch folgende teilweise an sich bekannte Verfahrensschritte gelöst:

a) Herstellen einer Betonmischung aus Zement und Zuschlagstoffen, die je Raumteil Zement mindestens sieben, vorzugsweise sieben bis zwölf Raumteile Zuschlagstoffe enthält, wobei als Zuschlagstoff vorzugsweise ein Gemisch aus 70–90, vorzugsweise 80% vorzugsweise doppelt gewaschenen Quarzriesel mit einer Körnung von 2 mm und 10 bis 30, vorzugsweise 20% Feinsand-Quarz mit einer Korngrösse von höchstens 1 mm verwendet wird,

b) Zusetzen von Wasser, bis die Mischung erdfeucht ist,

c) Formen des Ziersteines,

d) Abbindenlassen des Betons für 20 bis 30 Tage unter mässigem Nachnetzen und unter Ausschluss direkter Sonneneinstrahlung,

e) Aufbringen eines einbrennbaren Kunstharzpulvers, z.B. eines Polyesterharzes oder eines Epoxidharzes oder Mischungen derselben auf den Zierbetonstein, vorzugsweise auf elektrostatischem Weg und

f) Einbringen des Ziersteines in eine auf 180 bis 220°C, vorzugsweise 190 bis 200°C vorgewärmte Kammer für 15 bis 30, vorzugsweise 20 bis 25 min zum Einbrennen des Kunstharzpulvers zwecks Erzielung einer porenfreien Kunstharzschicht auf dem Zierstein.

Überraschenderweise hat sich gezeigt, dass Zierbetonsteine, die aus der erfindungsgemäss verwendeten mageren Betonmischung hergestellt sind, die Temperaturen beim Einbrennen der Kunststoffbeschichtung ohne weiteres aushalten. Die durch den geringeren Zementanteil bedingte verminderte Festigkeit der Zierbetonsteine schadet nicht, da diese nicht als tragende Bauelemente Verwendung finden.

Nachstehend werden Beispiele für das erfindungsgemässe Herstellungsverfahren der mit Kunststoff beschichteten Zierbetonsteine angegeben.

Beispiel 1: Es wurde eine Betonmischung aus 167 l Zement (PZ 275) und 1.169 l Zuschlagstoffen hergestellt (Mischungsverhältnis 1:7). Die Zuschlagstoffmischung bestand aus 80% doppelt gewaschenem Quarzriesel mit einer Körnung von 2 mm und 20% Feinsand-Quarz mit einer Körnung von 0–1 mm. Zement und Zuschlagstoff wurden gut gemischt und dann die Mischung mit Wasser versetzt, bis sie erdfeucht war. Unter «erdfeucht» wird ein Wassergehalt verstanden, bei dem eine in der Faust zusammengeballte Mischung nicht mehr auseinanderfällt.

Aus der so hergestellten Betonmischung wurden Ziersteine für einen Betongartenzaun hergestellt und 28 Tage lang abbinden gelassen. Während des Abbindens wurde mässig nachgenetzt und direkte Sonneneinstrahlung verhindert.

Die so erhaltenen, fertig abgebundenen, rohen Zierbetonsteine wurden unter Verwendung einer Druckluft-Sprühpistole elektrostatisch mit pulverförmigem Polyesterharz beschichtet und dann in einen auf eine Temperatur zwischen 180 und 220° erwärmten Ofen zum Einbrennen der Pulverbeschichtung eingebracht. Die Betonsteine wurden so lange im Ofen gehalten, dass das Pulver 10 min lang auf mindestens 180°C erwärmt wurde. Dies bedeutet eie Gesamtaufenthaltsdauer im Ofen von 20 bis 25 min.

Nach dem Ausbringen aus dem Ofen und Abkühlen erhält man Zierbetonsteine mit einer porenfreien Kunststoffschicht, ohne dass der Beton irgendwelche Risse oder Sprünge aufweist.

Beispiel 2: Nach der in Beispiel 1 angegebenen Arbeitsweise wurde eine Mischung aus 123 l Zement und 1.230 l Rieselsand (Mischungsverhältnis 1:10) zu Zierbetonsteinen verarbeitet. Auch bei diesem Mischungsverhältnis traten beim Einbrennen der Kunstharzbeschichtung keinerlei Risse oder Sprünge im Beton auf.

Beispiel 3: Nach der in Beispiel 1 angegebenen Arbeitsweise wurden aus einer Mischung von 104 l Zement und 1.248 l Rieselsand (Mischungsverhältnis 1:12) Zierbetonsteine hergestellt, die ebenfalls nach dem Einbrennen des Kunstharzes keinerlei Sprünge aufwiesen.

Die Versuche, Zierbetonsteine mit einer eingebrannten Kunstharzbeschichtung aus Betonmischungen mit einem Zement-Zuschlagstoff-Mischungsverhältnis von 1:3 und 1:5 herzustellen, schlugen fehl, da die aus diesen Mischungen hergestellten Zierbetonsteine beim Einbrennen der Kunstharzbeschichtung Sprünge zeigten bzw. teilweise zerfielen.

Je nach dem gewünschten Verwendungszweck können als Kunststoffbeschichtungen neben dem oben erwähnten Polyesterharz auch Mischungen aus Polyesterharz und Epoxidharz sowie Epoxidharz allein eingesetzt werden. Weiter besteht die Möglichkeit, gefärbte Kunstharze zur Beschichtung zu verwenden.

## Patentanspruch

Verfahren zur Herstellung von mit Kunstharz porenfrei beschichteten Zierbetonsteinen, gekennzeichnet durch folgende teilweise an sich bekannte Verfahrensschritte:

a) Herstellen einer Betonmischung aus Zement und Zuschlagstoffen, die je Raumteil Zement mindestens sieben, vorzugsweise sieben bis zwölf Raumteile Zuschlagstoffe enthält, wobei als Zuschlagstoff vorzugsweise ein Gemisch aus 70–90, vorzugsweise 80%, vorzugsweise doppelt gewaschenen Quarzriesel mit einer Körnung von 2 mm und 10 bis 30, vorzugsweise 20% Feinsand-Quarz mit einer Korngrösse von höchstens 1 mm verwendet wird,

b) Zusetzen von Wasser, bis die Mischung erdfeucht ist,

c) Formen des Ziersteines,

d) Abbindenlassen des Beton für 20 bis 30 Tage unter mässigem Nachnetzen und unter Ausschluss direkter Sonneneinstrahlung,

e) Aufbringen eines einbrennbaren Kunstharzpulvers, z.B. eines Polyesterharzes oder eines Epoxidharzes oder Mischungen derselben auf den Zierbetonstein, vorzugsweise auf elektrostatischem Weg, und

f) Einbringen des Ziersteines in eine auf 180 bis 220°C, vorzugsweise 190 bis 200°C vorgewärmte Kammer für 15 bis 30, vorzugsweise 20 bis 25 min zum Einbrennen des Kunstharzpulvers zwecks Erzielung einer porenfreien Kunstharzschicht auf dem Zierstein.

## Claim

Process of making of ornamental stones of concrete porelessly coated with an artificial resin characterized by the following steps partially known per se

a) making a concrete mixture of cement and balast material, which mixture contains per part by volume cement at least seven, preferably seven to twelve parts by volume of balast material, whereby a mixture of 70–90, preferably 80% of preferably twice washed quartz-sand of a particle size of 2 mm and 10 to 30, preferably 20% fine-quartz-sand of a maximum particle size of 1 mm is preferably used as balast material,

b) adding of water until the mixture is damp,

c) shaping of the ornamental stone,

d) setting the concrete for 20 to 30 days under moderate moistening and exclusion of direct sun-radiation,

e) applying of an annealable powder of an artificial resin, for example a polyester-resin or an epoxy-resin or mixtures thereof onto the ornamental stone of concrete preferably electrostatically, and

f) deposing the ornamental stone into a chamber preheated to 180 to 220°C preferable to 190 to 200°C for a time of 15 to 30, preferably 20 to 25 min for annealing the powder of the artificial resin to the end of achieving a poreless coating of the resin on the ornamental stone.

## Revendication

Procédé pour la fabrication de blocs moulés en béton décoratifs, revêtus de résine synthétique non poreuse, caractérisé par les stades opératoires suivants, partiellement connus en soi:

a) préparation d'un mélange de béton constitué par du ciment et des agrégats qui, pour chaque partie en volume de ciment, contient au moins 7, de préférence 7 à 12 parties en volume d'agrégats, étant donné que comme agrégat, on utilise de préférence un mélange constitué par 70 à 90%, de préférence 80%, de granulés de quartz, de préférence lavés deux fois ayant une taille de grain de 2 mm, et par 10 à 30%, de préférence 20%, de quartz à grain fin ayant une taille de grain de 1 mm maximum,

b) addition d'eau jusqu'à ce que le mélange ait l'humidité de la terre,

c) moulage du bloc décoratif,

d) repos pour la prise du béton pendant 20 à 30 jours, avec une humidification ultérieure modérée, et à l'abri du rayonnement solaire direct,

e) application d'une poudre de résine synthétique pouvant être cuite, par exemple d'une résine polyester ou d'une résine époxy ou bien de leur mélange, sur le bloc moulé en béton décoratif, de préférence par voie électrostatique, et

f) introduction du bloc décoratif dans une chambre préchauffée à 180–220°C, de préférence 190–200°C, pendant 15 à 30 minutes, de préférence pendant 20 à 25 minutes, pour cuire la poudre de résine synthétique en vue d'obtenir une couche de résine synthétique non poreuse sur le bloc décoratif.